# EUROPÄISCHE PATENTSCHRIFT

(11) **EP 4 018 173 B1**
(45) Veröffentlichungstag und Bekanntmachung des Hinweises auf die Patenterteilung: **27.03.2024**
(21) Anmeldenummer: 20781317.1
(22) Anmeldetag: 21.09.2020
(51) Int. Cl.: G01M 11/02

(54) **KOMBINATIONSDETEKTOR ZUR DETEKTION VON VISUELLEN UND OPTISCHEN EIGENSCHAFTEN EINER OPTIK UND ZUGEHÖRIGE PRÜFVORRICHTUNG FÜR EINE OPTIK**
DETECTOR AND ASSOCIATED TEST DEVICE FOR DETECTING VISUAL AND OPTICAL PROPERTIES OF AN OPTICAL SPECIMEN
DÉTECTEUR ET DISPOSITIF DE TEST ASSOCIÉ POUR DÉTECTER LES PROPRIÉTÉS VISUELLES ET OPTIQUES D'UN SPÉCIMEN OPTIQUE

(30) Priorität: 24.09.2019 DE 102019214602
(43) Veröffentlichungstag der Anmeldung: 29.06.2022
(73) Patentinhaber: Optocraft GmbH, 91058 Erlangen (DE)
(72) Erfinder: LAMPRECHT, Jürgen, 91058 Erlangen (DE); PFUND, Johannes, 91058 Erlangen (DE)
(74) Vertreter: FDST Patentanwälte
(86) Internationale Anmeldenummer: PCT/EP2020/076272
(87) Internationale Veröffentlichungsnummer: WO 2021/058427

(56) Entgegenhaltungen:
- US-A- 6 081 327
- US-A1- 2009 185 132
- US-A1- 2014 253 907
- US-A1- 2014 253 907

## Beschreibung

Die Erfindung bezieht sich auf einen Kombinationsdetektor nach dem Oberbegriff des Anspruchs 1 zur Detektion von mindestens einer visuellen Eigenschaft und mindestens einer optischen Eigenschaft einer Optik. Die Erfindung bezieht sich weiterhin auf eine Vorrichtung zum Prüfen einer Optik.

Als "Optik" wird hier und im Folgenden einerseits ein einzelnes optisches (d.h. die Lichtausbreitung beeinflussendes) Bauelement verstanden, insbesondere ein refraktives (lichtbrechendes) Element, z.B. eine Linse oder eine optisches Prisma, ein reflektierendes Element, z.B. ein Spiegel oder Strahlteiler, oder ein diffraktives (lichtbeugendes) Element. Die "Optik" kann andererseits aber auch in einer Kombination mehrerer optischer Bauelemente bestehen.

Im Zuge des Herstellungsprozesses oder bei Wartungen müssen Optiken regelmäßig in Hinblick auf ihre optischen und visuellen Eigenschaften überprüft werden.

Als "optische Eigenschaften" einer solchen Optik werden dabei diejenigen Eigenschaften der Optik verstanden, die den Einfluss der Optik auf die Lichtausbreitung charakterisieren. Hierunter fallen - je nach Art der Optik - refraktive Eigenschaften wie z.B. Brechkraft oder Asphärizität (z.B. "Torus" bzw. Zylinder" bei einer astigmatischen Kontaktlinse), reflektive Eigenschaften wie z.B. die Form der reflektierenden Oberfläche, der Reflektionsgrad oder die spektrale Selektivität, und/oder diffraktive Eigenschaften wie z.B. Beugungsmuster. Unter die optischen Eigenschaften einer Optik fallen weiterhin die von der Optik (gewollt oder ungewollt) hervorgerufene Wellenaberration und Abbildungseigenschaften (Punktbildfunktion, Modulation-Übertragungs-Funktion, etc.). Je nach Art und Komplexität der Optik können die optischen Eigenschaften als integrale (und damit für die gesamte Optik einheitliche) Größe oder als Funktion (d.h. als in Anhängigkeit mindestens eines Parameters, z.B. des Orts auf der Optik, der (insbesondere azimutalen) Orientierung der Optik oder der Wellenlänge des von der Optik beeinflussten Lichts, variierende Größe) vorliegen. Beispielsweise kann die Brechkraft als integrale Größe (z.B. sphärische Brechkraft) oder als räumliche Brechkraftverteilung bestimmt werden.

Als "visuelle Eigenschaften" (d.h. als visuell erkennbare Eigenschaften) einer Optik werden dagegen diejenigen Eigenschaften einer Optik bezeichnet, die mit dem Auge oder einem Bildverarbeitungsverfahren (ggf. unter Vergrößerung) erkennbar sind, z.B. die Größe (insbesondere der Durchmesser), die Form, Konturen (wie z.B. ein Außenrand), die Lage (insbesondere Zentrierung bezüglich einer optischen Achse) und die Orientierung (Ausrichtung), ein geometrisches Zentrum, etwaige makroskopische Defekte oder Beschädigungen, zweidimensionale oder dreidimensionale (z.B. gefräste oder geätzte) Markierungen, insbesondere Buchstaben, etc.

Während visuelle Eigenschaften einer Optik entweder durch Betrachtung der zu prüfenden Optik mit dem Auge (ggf. durch eine Lupe oder ein Mikroskop) oder durch automatische Verarbeitung eines photographischen Bildes der Optik geprüft oder analysiert werden können, sind optische Eigenschaften einer Optik in der Regel visuell nicht ohne Weiteres erkennbar oder charakterisierbar.

Zur Bestimmung oder Prüfung von optischen Eigenschaften werden vielmehr häufig Wellenfrontdetektoren oder Interferometer eingesetzt. Solche Detektoren sind dazu ausgebildet, die räumliche Phasenverteilung (Wellenfront) eines von der zu prüfenden Optik beeinflussten Lichtstrahls visuell erkennbar zu machen und zu detektieren.

Herkömmliche Prüfvorrichtungen, wie sie beispielsweise zum Prüfen von Kontaktlinsen oder Intraokularlinsen eingesetzt werden, weisen regelmäßig zusätzlich zu einem solchen Wellenfrontfrontdetektor auch eine photographische Kamera auf. Neben der Erkennung von Fehlern und Beschädigungen ermöglicht die Kamera auch eine Bestimmung der Lage und Ausrichtung der zu prüfenden Optik in der Prüfvorrichtung. Dies ist von elementarer Wichtigkeit auch für die Prüfung der optischen Eigenschaften, da viele optische Eigenschaften in Bezug auf die Geometrie der Optik (z.B. das geometrische Zentrum, Achsen oder einen Rand der Optik) bestimmt oder überprüft werden müssen, so dass diese optischen Eigenschaften nur dann überhaupt oder zumindest mit hinreichender Genauigkeit bestimmt oder überprüft werden können, wenn die Lage und Ausrichtung der Optik in der Prüfvorrichtung bekannt ist.

Um eine zu prüfende Optik sowohl mit dem Wellenfrontdetektor oder Interferometer als auch mit der Kamera untersuchen zu können, ohne die Optik und die Detektoren (inkl. der Kamera) relativ zueinander bewegen zu müssen, wird bei herkömmlichen Prüfvorrichtungen oft ein von der Optik beeinflusstes Messlichtbündel mittels eines Strahlteilers in zwei Teillichtbündel aufgeteilt, wobei diese Teillichtbündel dem Wellenfrontdetektor oder Interferometer bzw. der Kamera zugeleitet werden. Derartige Prüfvorrichtungen sind vergleichsweise groß und komplex. Sie sind somit auch mit einem entsprechend großen Herstellungsaufwand verbunden. Zudem sind sie häufig einerseits schwer zu justieren und andererseits anfällig für (z.B. erschütterungsbedingte) Fehljustierungen. Solche Fehljustierungen sind mitunter nicht offensichtlich erkennbar und können daher zu unbemerkten Messfehlern führen. Ein solcher, dem Oberbegriff des Anspruchs 1 entsprechender Kombinationsdetektor ist aus US 2014/253907 A1 bekannt.

Aus US 2009 0185132 A1 ist ein Phasendiversitäts-Wellenfrontsensor bekannt. Der Wellenfrontsensor umfasst ein optisches System mit einem diffraktiven optisches Element. Dieses diffraktive optische Element ist so angeordnet, dass es im Rahmen des optischen Systems Bilder aus dem Lichtstrahl erzeugt, die mindestens zwei Beugungsordnungen zugeordnet sind. Der Wellenfrontsensor umfasst weiterhin einen Bildsensor. In einer Ausführungsform sind das optische System mit dem diffraktiven optischen Element und der Bildsensor so angeordnet, dass sie telezentrische Pupillenebenenbilder des Lichtstrahls liefern. Mittels eines Gerchberg-Saxton-Phasenbestimmungsalgorithmus wird hieraus die Wellenfront des Lichtstrahls abgeleitet.

Der Erfindung liegt die Aufgabe zugrunde, die einfache und fehlerunanfällige Prüfung von Optiken zu ermöglichen.

Diese Aufgabe wird erfindungsgemäß gelöst durch einen Kombinationsdetektor mit den Merkmalen des Anspruchs 1 zur Detektion von mindestens einer visuellen Eigenschaft und mindestens einer optischen Eigenschaft einer Optik. Die obige Aufgabe wird weiterhin erfindungsgemäß gelöst durch eine Vorrichtung mit den Merkmalen des Anspruchs 6 zum Prüfen einer Optik. Vorteilhafte und teils für sich gesehen erfinderische Ausgestaltungsformen und Weiterentwicklungen sind in den Unteransprüchen und der nachfolgenden Beschreibung dargelegt.

Der Kombinationsdetektor umfasst einerseits einen Bildsensor, der eine Detektionsfläche (Apertur) aufweist. Andererseits umfasst der Kombinationsdetektor ein Phasenvisualisierungselement, das dazu ausgebildet ist, ein aus einer Einfallrichtung auftreffendes Eingangslichtbündel in ein oder mehrere Ausgangslichtbündel umzuwandeln, in denen die räumliche Phasenverteilung (äquivalentermaßen auch als "Wellenfront" bezeichnet) des Eingangslichtbündels unmittelbar oder mittelbar visuell erkennbar ist. Die Detektionsfläche des Bildsensors ist hier funktional und/oder strukturell in (mindestens) zwei Teilbereiche (Detektionsbereiche) gegliedert: Erfindungsgemäß ist das Phasenvisualisierungselement derart bezüglich der Detektionsfläche des Bildsensors angeordnet, dass das Ausgangslichtbündel oder die Ausgangslichtbündel nur auf einen ersten Teilbereich der Detektionsfläche fallen, während ein zweiter Teilbereich der Detektionsfläche zur Detektion des von dem Phasenvisualisierungselement unbeeinflussten Eingangslichtbündels zu der Einfallrichtung hin exponiert ist. Der zweite Teilbereich ist vorzugsweise unmittelbar in dem Strahlengang des Eingangslichtbündels angeordnet; dem zweiten Teilbereich sind dabei allenfalls strahlumlenkende oder abbildende Optiken oder transparente Medien vorgeschaltet, die die visuelle Information des Eingangslichtbündels nicht irreversibel verändern. Alternativ ist dem zweiten Teilbereich ein Filter vorgeschaltet. Als "Filter" wird hier und im Folgenden ein optisches Element bezeichnet, das einfallendes Licht nach bestimmten Kriterien (z.B. Wellenlänge oder Polarisation) selektiert, z.B. ein Farb- oder Polarisationsfilter, das dabei aber - in Gegensatz zu dem Phasenvisualisierungselement - nicht die räumliche Phasenverteilung des Eingangslichtbündels visuell sichtbar macht.

Zur Detektion der mindestens einen visuellen Eigenschaft und der mindestens einen optischen Eigenschaft wird der Kombinationsdetektor derart bezüglich einer zu analysierenden Optik angeordnet, dass ein von der Optik beeinflusstes Lichtbündel als Eingangslichtbündel auf das Phasenvisualisierungselement und den zweiten Teilbereich der Detektionsfläche fällt. Mittels des Bildsensors wird dabei ein (Gesamt-) Bild der zu analysierenden Optik aufgenommen, das - entsprechend der Aufteilung der Detektionsfläche des Bildsensors - in einen dem ersten Teilbereich entsprechenden ersten Bildbereich und einen dem zweiten Teilbereich entsprechenden zweiten Bildbereich gegliedert ist. Das Phasenvisualisierungselement und der erste Teilbereich der Detektionsfläche bilden hierbei zusammen einen Wellenfrontdetektor zur Detektion der mindestens einen optischen Eigenschaft der Optik, wobei diese mindestens eine optische Eigenschaft aus dem ersten Bildbereich bestimmbar ist. Durch den zweiten Teilbereich der Detektionsfläche wird zumindest ein Teil der Optik photographisch abgebildet, d.h. photochemisch oder elektronisch in eine bildbearbeitungstechnisch auswertbare Information umgewandelt. Der entsprechende (nicht von dem Phasenvisualisierungselement beeinflusste) zweite Bildbereich enthält dabei die Information über die mindestens eine visuelle Eigenschaft der Optik.

Der vorstehend beschriebene Kombinationsdetektor erlaubt eine einfache und fehlerunanfällige Prüfung von Optiken. Insbesondere lässt sich der Kombinationsdetektor - im Vergleich zu herkömmlichen Geräten oder Gerätekombinationen mit vergleichbarem Funktionsumfang - besonders kompakt herstellen. Ein Strahlteiler, wie er bei herkömmlichen Prüfvorrichtungen vorhanden ist, ist bei dem Kombinationsdetektor nicht erforderlich und daher bevorzugt auch nicht vorgesehen. Das zu untersuchende Eingangslichtbündel wird für die Bestimmung der visuellen und optischen Eigenschaften der zu prüfenden Optik insbesondere nicht in mehrere identische Lichtbündel repliziert. Vielmehr werden verschiedene Teile des Eingangslichtbündels hinsichtlich der optischen bzw. visuell erkennbaren Eigenschaften der zu prüfenden Optik analysiert.

In einer einfachen Ausführung der Erfindung füllen der erste Teilbereich und der zweite Teilbereich die Detektionsfläche vollständig aus. In alternativen Ausführungsformen der Erfindung kann die Detektionsfläche aber auch in mehr als zwei Teilbereiche gegliedert sein. Sie kann beispielsweise "mehrere erste Teilbereiche" umfassen, denen jeweils ein Phasenvisualisierungselement vorgeschaltet ist. Zusätzlich oder alternativ kann die Detektionsfläche auch beispielsweise "mehrere zweite Teilbereiche" ohne vorgeschaltetes Phasenvisualisierungselement aufweisen, z.B. einen Teilbereich mit einem vorgeschaltetem Filter und einem anderen Teilbereich mit einem andersartigen Filter oder ohne vorgeschalteten Filter.

Der erste Teilbereich und der zweite Teilbereich der Detektionsfläche sind vorzugsweise konzentrisch zueinander angeordnet. Einer der Teilbereiche, insbesondere der erste Teilbereich, ist hierbei also innerhalb des anderen, insbesondere des zweiten Teilbereichs angeordnet. Alternativ können die Teilbereiche im Rahmen der Erfindung aber auch in anderer Weise, z.B. nebeneinander, angeordnet sein.

In einer zweckmäßigen Ausführung der Erfindung umfasst das Phasenvisualisierungselement eine ein- oder zweidimensionale Mikrolinsenanordnung, z.B. ein Mikrolinsenarray, wie es an sich bei einem herkömmlichen Shack-Hartmann-Detektor eingesetzt wird. In alternativen Ausführungsformen der Erfindung umfasst das Phasenvisualisierungselement eine Lochplatte (z.B. entsprechend der Lochplatte eines herkömmlichen Hartmann-Detektors), ein Interferenzgitter (z.B. entsprechend dem Interferenzgitter eines herkömmlichen Talbot-Detektors) oder ein Shearing-Interferometer. Grundsätzlich ist ferner im Rahmen der Erfindung auch der Einsatz eines andersartigen Wellenfrontsensors oder Interferometers, z.B. eines Michelson-Interferometers, als Phasenvisualisierungselement denkbar. Vorzugsweise ist das Phasenvisualisierungselement unmittelbar (d.h. ohne zwischengeschaltete optische Komponenten) vor oder auf der Detektionsfläche des Bildsensors fixiert, insbesondere verklemmt, verschraubt oder verklebt. Der Bildsensor und das Phasenvisualisierungselement bilden dabei insbesondere eine fest zusammenhängende Baueinheit, so dass eine selbsttätige Dejustierung des Phasenvisualisierungselements bezüglich der Detektionsfläche (z.B. durch Erschütterungen, etc.) zumindest weitgehend ausgeschlossen werden kann.

Grundsätzlich denkbar im Rahmen der Erfindung ist der Einsatz einer Photoplatte oder eines Photofilms als Bildsensor. Vorzugsweise wird aber ein elektronischer Bildsensor eingesetzt. Dieser ist in zweckmäßiger Ausführung der Erfindung durch einen CCD- oder CMOS-Chip gebildet. Alternativ ist der Bildsensor beispielsweise durch ein Photodiodenarray realisiert. In der Regel hat der elektronische Bildsensor eine zweidimensionale Ortsauflösung, weist also jeweils eine Mehrzahl von Pixelzeilen und -spalten auf. Im Rahmen der Erfindung liegen aber auch Ausführungsformen, bei denen der Bildsensor eindimensional ist (also nur eine einzige Pixelzeile aufweist). Die Detektionsfläche des Bildsensors hat in diesem Fall nur die Breite eines Pixels. Ein solcher eindimensionaler Bildsensor kann im Rahmen der Erfindung ortsfest angeordnet sein, wenn eine zweidimensionale Bild- oder Phaseninformation nicht benötigt wird. Alternativ wird der Bildsensor - mit dem Phasenvisualisierungselement oder ohne das Phasenvisualisierungselement - gedreht oder quer zu der Einfallrichtung des Eingangslichtbündels verschoben, so dass mittels des Bildsensors eine die Detektorfläche überschreitende Fläche abgescannt wird.

Die erfindungsgemäße Vorrichtung zum Prüfen der Optik (nachfolgend kurz: Prüfvorrichtung) umfasst eine Lichtquelle zur Erzeugung eines Messlichtbündels sowie den vorstehend beschriebenen, erfindungsgemäßen Kombinationsdetektor, insbesondere in einer der vorstehend beschriebenen Ausführungsvarianten. Im Rahmen der Prüfvorrichtung ist der Kombinationsdetektor insbesondere derart zu der Lichtquelle angeordnet, dass Licht, das von der zu Prüfzwecken in dem Strahlengang des Messlichtbündels angeordneten Optik transmittiert oder reflektiert wird, als Eingangslichtbündel auf den Kombinationsdetektor fällt.

Vorzugsweise umfasst die Prüfvorrichtung zusätzlich einen in dem Strahlengang des Messlichtbündels zwischen der Lichtquelle und dem Kombinationsdetektor angeordneten Probenhalter zur Fixierung der zu prüfenden Optik.

Der zu prüfenden Optik und dem Phasenvisualisierungselement bzw. dem zweiten Teilbereich der Detektionsfläche ist vorzugsweise eine abbildende Optik, z.B. ein Kepler-Teleskop (auch als "Relay Lens" bezeichnet), zwischengeschaltet, so dass auf dem Phasenvisualisierungselement und/oder dem zweiten Teilbereich der Detektionsfläche ein scharfes Bild der zu prüfenden Optik erzeugt wird. Die abbildende Optik kann dabei im Rahmen der Erfindung als Teil des Kombinationsdetektors ausgebildet sein (und somit mit den übrigen Komponenten des Kombinationsdetektors eine zusammenhängende Baueinheit bilden) oder als von dem Kombinationsdetektor losgelöstes Teil der Vorrichtung vorgesehen sein. Alternativ wird das Bild der zu prüfenden Optik ohne zwischengeschaltete abbildende Optik auf das Phasenvisualisierungselement und den zweiten Teilbereich der Detektionsfläche projiziert.

Weiterhin ist vorzugsweise ein optisches Element zur Angleichung der optischen Wege des auf dem Phasenvisualisierungselement auftreffenden Teils des Eingangslichtbündels und des auf dem zweiten Teilbereich der Detektionsfläche auftreffenden Teils des Eingangslichtbündels vorgesehen. Durch dieses optische Element wird der geometrische Abstand des Phasenvisualisierungselements zu der Detektionsfläche kompensiert. Es wird deshalb nachfolgend auch als "Kompensationselement" bezeichnet. Das Kompensationselement ist beispielsweise durch eine Glasplatte gebildet, die nur dem zweiten Teilbereich der Detektionsfläche, nicht aber dem Phasenvisualisierungselement vorgeschaltet ist, oder die in einem mit dem zweiten Teilbereich der Detektionsfläche korrespondierenden Bereich eine größere Stärke aufweist als im Bereich des Phasenvisualisierungselements. Wiederum alternativ ist das Kompensationselement durch ein refraktives Element gebildet, das in einem mit dem zweiten Teilbereich der Detektionsfläche korrespondierenden Bereich einen größeren Brechungsindex aufweist als im Bereich des Phasenvisualisierungselements. Bei Ausführungsformen der Erfindung, bei denen dem Bildsensor und dem Phasenvisualisierungselement eine abbildende Optik vorgeschaltet ist, ist das Kompensationselement insbesondere derart ausgelegt, dass die zu prüfende Optik durch die abbildende Optik sowohl auf das Phasenvisualisierungselement als auch auf den zweiten Teilbereich der Detektionsfläche scharf abgebildet wird. Auch das Kompensationselement kann im Rahmen der Erfindung als Teil des Kombinationsdetektors ausgebildet sein (und somit mit den übrigen Komponenten des Kombinationsdetektors eine zusammenhängende Baueinheit bilden) oder als von dem Kombinationsdetektor losgelöstes Teil der Vorrichtung vorgesehen sein.

Weiterhin umfasst die Vorrichtung in einer vorteilhaften Ausführungsform eine Auswertungseinheit zur Auswertung eines von dem Bildsensor aufgenommenen Bildes der zu prüfenden Optik, das - wie vorstehend beschrieben - einen dem ersten Teilbereich der Detektionsfläche entsprechenden ersten Bildbereich und einen dem zweiten Teilbereich der Detektionsfläche entsprechenden zweiten Bildbereich aufweist. Die Auswertungseinheit ist dazu eingerichtet ist, automatisch mindestens eine optische Eigenschaft der zu prüfenden Optik (insbesondere eine der eingangs genannten optische Eigenschaften) aus dem ersten Bildbereich zu ermitteln. Zusätzlich oder alternativ ist die Auswertungseinheit dazu eingerichtet ist, automatisch mindestens eine visuelle Eigenschaft (insbesondere eine der eingangs genannten visuellen Eigenschaften) der zu prüfenden Optik aus dem zweiten Bildbereich zu ermitteln.

Die Auswertungseinheit ist vorzugsweise durch ein programmierbares Gerät, insbesondere einen Computer oder Mikrocontroller, gebildet, in dem die Funktionalität zur Bestimmung der mindestens einen optischen oder visuellen Eigenschaft in Form eines Programms implementiert ist. Alternativ hierzu kann die Auswertungseinheit im Rahmen der Erfindung aber auch durch ein nicht-programmierbares Gerät (z.B. in Form eines ASIC) gebildet sein, in dem die vorstehend beschriebene Funktionalität schaltungstechnisch (d.h. durch Hardware) realisiert ist. Wiederum alternativ kann die Auswertungseinheit im Rahmen der Erfindung durch eine Kombination aus programmierbaren und nicht-programmierbaren Komponenten, z. B. einem Mikrocontroller mit einem darin implementierten Steuerprogramm und einem ASIC, gebildet sein.

Zum Zweck der automatischen Auswertung werden der erste Bildbereich und/oder der zweite Bildbereich vorzugsweise automatisch aus dem von dem Bildsensor aufgenommenen Gesamtbild extrahiert. In einfachen, aber zweckmäßigen Ausführungen der Erfindung erfolgt diese Extraktion gemäß einer festen (d.h. im normalen Betrieb der Prüfvorrichtung unveränderten) Vorgabe, z.B. indem die Signale der dem ersten bzw. zweiten Bildbereich entsprechenden Pixelgruppen des Bildsensors durch eine entsprechende (Hardware-)Verschaltung in zwei verschiedenen, dem ersten bzw. zweiten Bildbereich entsprechenden Datensätzen abgespeichert werden, oder indem das Bild durch elektronische Bildverarbeitung nach Maßgabe einer unveränderlichen Maske in zwei dem ersten bzw. zweiten Bildbereich entsprechenden Teilbilder aufgeteilt wird.

In einer vorteilhaften Variante der Erfindung ist die Auswertungseinheit abweichend davon dazu eingerichtet, den ersten Bildbereich und/oder den zweiten Bildbereich, insbesondere mittels elektronischer Mustererkennung, in dem von dem Bildsensor aufgenommenen Gesamtbild automatisch zu erkennen und zu segmentieren. Dies erlaubt eine besonders präzise Auswertung des ersten bzw. zweiten Bildbereichs in Anwendungsfällen in denen - z.B. aufgrund stark abweichender Eigenschaften verschiedener zu prüfender Optiken - die Einfallrichtung und/oder Fokussierung des Eingangslichtbündels und somit die Lage und/oder Größe des ersten und zweiten Bildbereichs von Prüfvorgang zu Prüfvorgang signifikant variieren.

Der erfindungsgemäße Kombinationsdetektor und die zugehörige Prüfvorrichtung können grundsätzlich zur Analyse und Prüfung beliebiger Optiken (insbesondere der eingangs genannten Optiken) eingesetzt werden. In einer bevorzugten Verwendung werden der Kombinationsdetektor und die damit ausgerüstete Prüfvorrichtung aber zum Prüfen von Linsen, insbesondere Kontaktlinsen oder Intraokularlinsen, eingesetzt. Besonders vorteilhaft ist zudem auch der Einsatz des Kombinationsdetektors und der damit ausgerüsteten Prüfvorrichtung zur Prüfung von asphärischen Linsen, z.B. für industrielle Anwendungen.

In den vorstehend beschriebenen Anwendungsfällen werden als optische Eigenschaften vorzugsweise refraktive Eigenschaften, insbesondere die Brechkraft, eine ortsaufgelöste Brechkraftverteilung und/oder die Asphärizität (z.B. "Torus" bzw. "Zylinder") bestimmt.

Gegenüber herkömmlichen Prüfvorrichtungen mit einem Wellenfrontfrontdetektor und einer davon separaten photographischen Kamera haben der erfindungsgemäße Kombinationsdetektor und die zugehörige Prüfvorrichtung den Vorteil, dass ein Lichtdetektor eingespart wird. Die erfindungsgemäße Prüfvorrichtung kann daher besonders kompakt und mit vergleichsweise geringem Aufwand realisiert werden. Insbesondere ist bei der erfindungsgemäßen Lösung eine Teilung des durch die zu prüfende Optik beeinflussten Lichts nicht notwendig und daher vorzugsweise auch nicht vorgesehen. Zudem ist infolge der Integration der beiden Detektionsbereiche auf der zusammenhängenden Detektionsfläche des Bildsensors die Justierung der optischen Komponenten des erfindungsgemäßen Kombinationsdetektors und der zugehörigen Prüfvorrichtung wesentlich vereinfacht. Eine etwaige Dejustierung ist einfach zu erkennen.

Eine Verkörperung der Erfindung ist ferner ein Verfahren zur Detektion von mindestens einer visuell erkennbaren Eigenschaft und mindestens einer optischen Eigenschaft einer Optik. Verfahrensgemäß wird mittels eines Bildsensors und eines vorgeschalteten Phasenvisualisierungselements ein erstes Teilbild erzeugt, in dem eine räumliche Phasenverteilung eines durch die zu prüfende Optik beeinflussten Messlichtbündels visuell erkennbar gemacht ist. Mittels des Bildsensors wird zudem ein zweites Teilbild erzeugt, das eine Abbildung oder Projektion eines Teils der zu prüfenden Optik enthält. Die mindestens eine optische Eigenschaft wird aus dem ersten Teilbild ermittelt, während die mindestens eine visuell erkennbare Eigenschaft aus dem zweiten Teilbild ermittelt wird. Von herkömmlichen Prüfverfahren unterscheidet sich das erfindungsgemäße Verfahren insbesondere dadurch, dass derselbe Bildsensor zur Erzeugung des ersten Teilbilds und des zweiten Teilbilds verwendet wird. Das Verfahren wird vorzugsweise mittels der vorstehend beschriebenen Vorrichtung oder des vorstehend beschriebenen Kombinationsdetektors ausgeführt. Alternativ hierzu wird der Bildsensor zur Aufnahme des ersten Teilbilds und des zweiten Teilbilds bewegt zwischen einer ersten Stellung, in der seine Detektionsfläche von dem Phasenvisualisierungselement überdeckt wird, und einer zweiten Stellung, in der die Detektionsfläche zur Detektion des von dem Phasenvisualisierungselement unbeeinflussten Eingangslichtbündels zu der Einfallrichtung hin exponiert ist.

Nachfolgend wird ein Ausführungsbeispiel der Erfindung anhand einer Zeichnung näher erläutert. Darin zeigen:

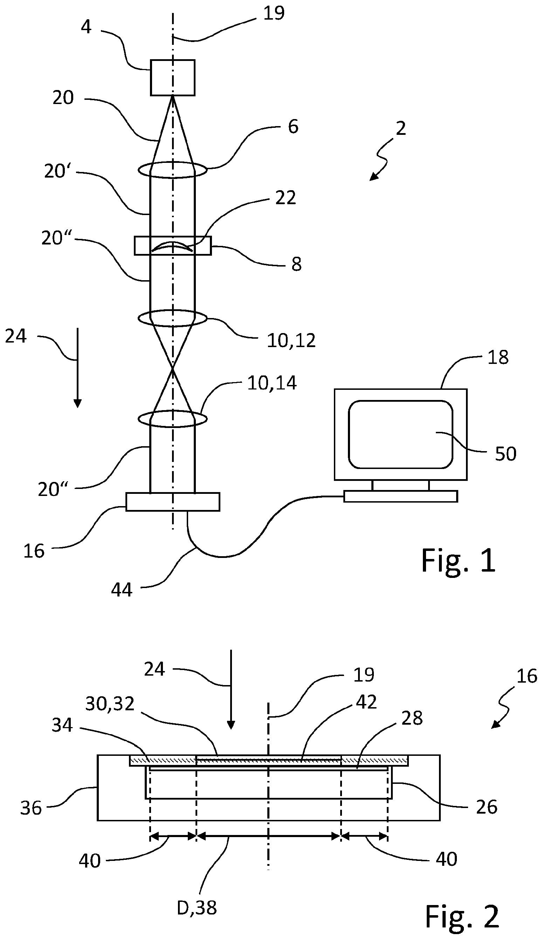

- Fig. 1: in einer schematischen Darstellung eine Vorrichtung zum Prüfen von Kontaktlinsen mit einer Lichtquelle zur Erzeugung eines Messlichtbündels, mit einem in dem Strahlengang des Messlichtbündels angeordneten Probenhalter zur Fixierung einer zu prüfenden Kontaktlinse, mit einem Kombinationsdetektor zur Detektion von visuellen und optischen Eigenschaften der Kontaktlinse und mit einer Auswertungseinheit in Form eines Computers zur Auswertung eines von dem Kombinationsdetektor aufgenommenen Bildes der Kontaktlinse, in dem die Information über die visuellen und optischen Eigenschaften der Kontaktlinse enthalten sind,
- Fig. 2: in einer schematischen Schnittdarstellung den Kombinationsdetektor der Vorrichtung gemäß Fig. 1,
- Fig. 3: in einer schematischen Draufsicht den Kombinationsdetektor gemäß Fig. 2,
- Fig. 4: in schematischer Darstellung ein mittels des Kombinationsdetektors aufgenommenes Bild einer Kontaktlinse,
- Fig. 5: in einem schematischen Blockschaltbild die Struktur einer in der Auswertungseinheit implementierten Auswertungssoftware, sowie
- Fig. 6: in Darstellung gemäß Fig. 2 eine alternative Ausführungsform des Kombinationsdetektors.

Einander entsprechende Teile und Strukturen sind in allen Figuren stets mit gleichen Bezugszeichen versehen.

Die in Fig. 1 grob schematisch dargestellte Prüfvorrichtung 2 dient zur Prüfung von Kontaktlinsen.

Die Vorrichtung 2 umfasst eine (Punkt-)Lichtquelle 4, einen Kollimator 6, einen Probenhalter 8, ein Kepler-Teleskop 10 (Relay Lens) mit zwei Linsen 12 und 14, einen Kombinationsdetektor 16 und eine Auswertungseinheit 18. Die Lichtquelle 4, der Kollimator 6, der Probenhalter 8, die Linsen 12,14 des Kepler-Teleskops 10 und der Kombinationsdetektor 16 sind entlang einer optischen Achse 19 einander nachgeschaltet.

Die Lichtquelle 4 ist beispielsweise durch das Ende einer LED-gespeisten optischen Faser gebildet und erzeugt ein Messlichtbündel 20. Das zunächst divergente Messlichtbündel 20 wird durch den Kollimator 6 parallel ausgerichtet. Das parallelisierte Messlichtbündel 20' fällt dann auf den Probenhalter 8, in dem in dem dargestellten Beispiel eine zu prüfende Kontaktlinse 22 positioniert ist. Bei der zu prüfenden Kontaktlinse 22 handelt es sich beispielsweise um eine weiche Kontaktlinse. In diesem Fall umfasst der Probenhalter 8 eine flüssigkeitsgefüllte Küvette, in der die Kontaktlinse 22 aufgenommen ist. Alternativ wird die Prüfvorrichtung 2 zur Prüfung von harten Kontaktlinsen herangezogen. In diesem Fall umfasst der Probenhalter 8 vorzugsweise eine transparente Auflage, auf der die zu prüfenden Kontaktlinsen in Luft positioniert werden.

Das durch den Probenhalter 8 transmittierte und dabei durch die zu prüfende Kontaktlinse 22 beeinflusste Messlichtbündel 20" fällt durch die Linsen 12 und 14 des Kepler-Teleskops 10 als Eingangslichtbündel in einer Lichteinfallsrichtung 24 auf den Kombinationsdetektor 16. Die Kontaktlinse 22 wird hierbei auf den Kombinationsdetektor 16 abgebildet.

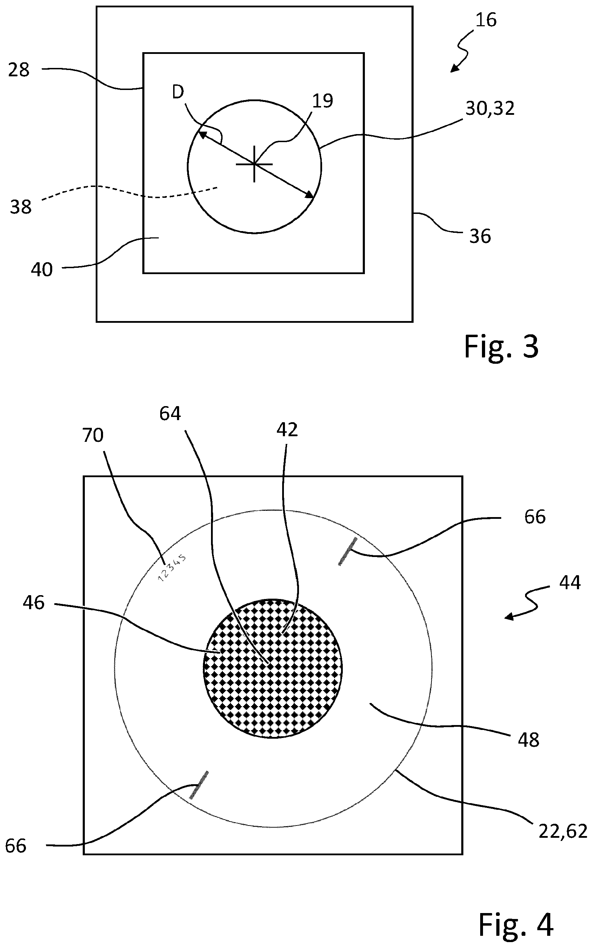

Der in den Fig. 2 und 3 in größerem Detail abgebildete Kombinationsdetektor 16 umfasst einen Bildsensor 26, der hier durch einen CCD-Chip gebildet ist, mit einer Detektionsfläche 28. Der Kombinationsdetektor 16 umfasst weiterhin ein Phasenvisualisierungselement 30, das der Detektionsfläche 28 des Bildsensors 26 (genauer gesagt einem Teil der Detektionsfläche 28) - in Einfallsrichtung 24 gesehen - vorgeschaltet ist. Das Phasenvisualisierungselement 30 ist in dem dargestellten Beispiel ein zweidimensionales Mikrolinsenarray 32 (also eine zweidimensionale Anordnung von Linsen mit einem typischen Durchmesser zwischen 50 Mikrometern und 1000 Mikrometern, insbesondere 150 Mikrometern), das beispielweise mittels eines Ätzprozesses in eine Glasplatte 34 eingebracht wurde.

Die Glasplatte 34 mit dem Mikrolinsenarray 32 ist - vorzugsweise durch Verschrauben oder Verklemmen - unmittelbar (d.h. ohne zwischengeschaltete optische Komponenten) auf dem Bildsensor 26 aufgebracht, wobei zwischen den Mikrolinsenarray 32 und der Detektionsfläche 28 ein Abstand von typischerweise zwischen 0,5 Millimetern und 30 Millimetern gebildet ist. In dem hier dargestellten Ausführungsbeispiel sind der Bildsensor 26 und die Glasplatte 34 mit dem Mikrolinsenarray 32 derart in einem Gehäuse 36 des Kombinationsdetektors 16 gehalten, dass sie in einer in einer unverrückbaren (und insbesondere auch erschütterungsfesten) Relativposition zueinander fixiert sind.

Wie aus den Fig. 2 und 3 hervorgeht, hat das Mikrolinsenarray 32 eine kreisförmige Außenkontur mit einem Durchmesser D, der die Ausdehnung der - hier beispielhaft quadratischen - Detektionsfläche 28 unterschreitet. Das Mikrolinsenarray 32 ist hier zentriert bezüglich der Detektionsfläche 28 angeordnet.

Durch das im Vergleich zu der Detektionsfläche 28 kleinere Mikrolinsenarray 32 wird die Detektionsfläche 28 in zwei Teile gegliedert, nämlich in einen kreisförmigen ersten Teilbereich 38, der in Lichteinfallsrichtung 24 gesehen mit dem Mikrolinsenarray 32 überlappt, sowie in einem ringförmigen zweiten Teilbereich 40 (hier mit einer der Außenkontur der Detektionsfläche 28 entsprechenden quadratischen Außenkontur), der den restlichen Teil der Detektionsfläche 28 einnimmt. Die Teilbereiche 38 und 40 der Detektionsfläche 28 sind hierbei konzentrisch zueinander angeordnet.

Dem ersten Teilbereich 38 ist das Mikrolinsenarray 32 in Lichteinfallsrichtung 24 vorgelagert, so dass das auf den Teilbereich 38 fallende Licht das Mikrolinsenarray 32 transmittieren muss. Das Mikrolinsenarray 32 wirkt dabei mit dem Teilbereich 38 der Detektionsfläche 28 zur Bildung eines Shack-Hartmann-Wellenfrontdetektors zusammen: Gemäß dem für einen Shack-Hartmann-Wellenfrontdetektor typischen Funktionsprinzip wird das als Eingangslichtbündel auf das Mikrolinsenarray 32 einfallende Messlichtbündel 20" durch das Mikrolinsenarray 32 in eine Vielzahl von Ausgangslichtbündel 42 umgewandelt, die durch Ihre Ausbreitungsrichtung eine Information über die räumliche Phasenverteilung (Wellenfront) des einfallenden Messlichtbündels 20" beinhalten. Die Ausgangslichtbündel 42 werden von dem Bildsensor 26 als diskrete Lichtpunkte innerhalb des ersten Teilbereichs 38 der Detektionsfläche 28 detektiert. Aus der Lage dieser Lichtpunkte sind dabei die lokale Ausbreitungsrichtung, und damit die räumliche Phasenverteilung des einfallenden Messlichtbündels 20" bestimmbar. Hieraus können wiederum die optischen Eigenschaften der zu prüfenden Kontaktlinse 22 bestimmt werden.

Dem zweiten Teilbereich 40 der Detektionsfläche 28 ist das Mikrolinsenarray 32 nicht vorgeschaltet. Das als Eingangslichtbündel einfallende Messlichtbündel 20" wird somit in dem zweiten Teilbereich 40 nicht durch das Mikrolinsenarray 32 beeinflusst. In dem zweiten Teilbereich 40 wird vielmehr ein Abbild eines Teils der zu prüfenden Kontaktlinse 22 aufgenommen.

Der Bildsensor 26 erzeugt ein (Gesamt-)Bild 44 - entsprechend der über die gesamte Detektionsfläche 28 detektierten Helligkeitsverteilung - und führt dieses Bild 44 in Form eines Bilddatensatzes der Auswertungseinheit 18 zu. Ein Beispiel für das Gesamtbild 44 ist in Fig. 4 dargestellt. Hieraus ist ersichtlich, dass das Gesamtbild 44 ebenso wie die Detektionsfläche 28 in zwei Teile gegliedert ist, nämlich in einen ersten Bildbereich 46, der dem ersten Teilbereich 38 der Detektionsfläche 28 entspricht, und in einen zweiten Bildbereich 48, der dem zweiten Teilbereich 40 der Detektionsfläche 28 entspricht. In dem ersten Bildbereich 46 sind folglich die von dem Mikrolinsenarray 32 erzeugten Ausgangslichtbündel 42 als Punktmuster zu erkennen. Der zweite Bildbereich 48 enthält dagegen ein Abbild der zu prüfenden Kontaktlinse 22, genauer gesagt eines Randbereichs der Kontaktlinse 22.

Bei der Dimensionierung und Anordnung des Mikrolinsenarrays 32 bezüglich der Detektionsfläche 28 wurde berücksichtigt, dass die für die optischen Eigenschaften von Kontaktlinsen relevante optische Zone regelmäßig nur einen zentralen Bereich der gesamten Linsenfläche einnimmt. Typischerweise hat die gesamte Kontaktlinse 22 einen geometrischen Durchmesser von ca. 10 Millimetern bis 21 Millimetern, typischerweise 14 Millimetern, während die optische Zone einen Durchmesser von ca. 8 Millimetern einnimmt. Die optische Zone der Kontaktlinse 22 wird dabei auf das Mikrolinsenarray 32 des Kombinationsdetektors 16 abgebildet, während ein die optische Zone umgebender Rand der Kontaktlinse 22 auf den zweiten Teilbereich 40 der Detektorfläche 28 abgebildet wird.

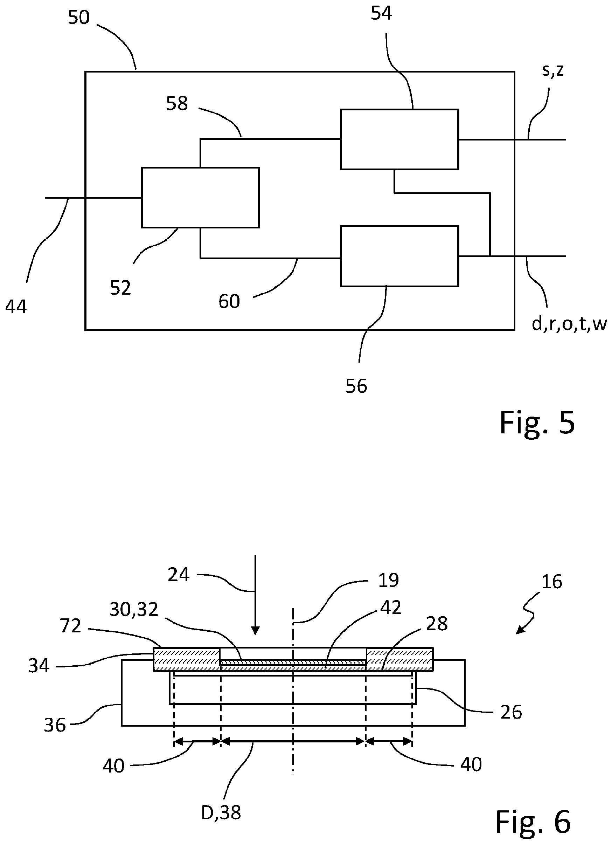

Die Auswertungseinheit 18 ist vorzugsweise durch einen Computer, beispielsweise eine Personal-Computer, gebildet, in dem eine Auswertungssoftware 50 installiert ist. Eine beispielhafte Struktur der Auswertungssoftware 50 ist in Fig. 5 grob vereinfacht dargestellt. Danach umfasst die Auswertungssoftware 50 ein Segmentierungsmodul 52, ein optisches Auswertungsmodul 54 und ein Bilderkennungsmodul 56.

Durch das Segmentierungsmodul 52 werden die Bildbereiche 46 und 48 in dem Gesamtbild 44 mittels automatischer Mustererkennung erkannt und segmentiert. Die den Bildbereichen 46 und 48 jeweils entsprechende Bildinformation wird also voneinander getrennt (d.h. bildverarbeitungstechnisch ausgeschnitten), um in getrennten Teilbildern 58 und 60 separat weiterverarbeitet zu werden. Alternativ hierzu trennt das Segmentierungsmodul 52 die Bildbereiche 46 und 48 nach Maßgabe einer vorgegebenen Maske. Dabei werden vorgegebene komplementäre Pixelgruppen des Gesamtbildes 44 dem Teilbild 58 bzw. dem Teilbild 60 zugewiesen. Das den ersten Bildbereich 46 beinhaltende Teilbild 58 wird dem optischen Auswertungsmodul 54 zugeführt, während das den zweiten Bildbereich 48 beinhaltende Teilbild 60 dem Bilderkennungsmodul 56 zugeführt wird.

Das Bilderkennungsmodul 56 identifiziert in dem Teilbild 60 (und somit in dem Bildbereich 48 des von dem Bildsensor 26 aufgenommenen Bildes 44) durch automatische Mustererkennung folgende visuell erkennbare Eigenschaften der zu prüfenden Kontaktlinse 22:
- eine Außenkontur 62 der Kontaktlinse 22; anhand der identifizierten Außenkontur 62 berechnet das Bilderkennungsmodul 56 den Durchmesser d der Kontaktlinse 22 sowie die Lage r eines geometrischen Zentrums 64 der Kontaktlinse 22 (d.h. des Mittelpunkts der kreisförmigen Außenkontur);
- zwei- oder dreidimensionale Markierungen auf der Kontaktlinse 22; in Fig. 4 sind beispielhaft Markierungen 66 in Form von zwei einander zu beiden Seiten des optischen Zentrums 64 der Kontaktlinse 22 diametral gegenüberliegenden Strichen erkennbar, die hier als Hilfe zum Einsetzen der Kontaktlinse 22 in der vorgesehenen azimutalen Orientierung dient (die hier beispielhaft torische, und damit asphärische Kontaktlinse 22 muss beispielsweise derart in das Auge des Trägers eingesetzt werden, dass die Markierungen senkrecht ausgerichtet sind); das Bilderkennungsmodul 56 erkennt die Markierungen 66 und bestimmt hieraus die (azimutale) Orientierung o der Kontaktlinse 22 in der Prüfvorrichtung 2;
- etwaige Beschriftungen 70 auf der Kontaktlinse 22, z.B. Produktname, Seriennummer, Designwerte (insbesondere Sollwerte für optische Größen wie Brechkraft, Torus, etc.); und
- etwaige Defekte der Kontaktlinse 22; als Defekte werden durch das Bilderkennungsmodul 56 beispielsweise erkannte Strukturen innerhalb der erkannten Außenkontur 62 identifiziert, die eine vorgegebene Mindestgröße überschreiten und weder als Markierung noch als Beschriftung identifiziert werden können.

In alternativen Ausführungsformen ist das Bilderkennungsmodul 56 dazu eingerichtet, QR-Codes oder sonstige Codes und/oder etwaige Besonderheiten der äußeren Form (z.B. Abweichungen von einer kreisförmigen Außenkontur) zu erkennen.

Das Bilderkennungsmodul 56 gibt die ermittelten visuellen Eigenschaften, insbesondere also den Durchmesser d und die Lage r des geometrischen Zentrums 64, die durch die Markierungen 66 angezeigte Orientierung o der Kontaktlinse 22, etwaigen erkannten Text t sowie gegebenenfalls einen Warnhinweis w auf etwaige erkannte Defekte aus. Sofern benötigt, wird zumindest ein Teil dieser Information (insbesondere die Lage r des geometrischen Zentrums 64 und die Orientierung o der Kontaktlinse 22) zudem auch dem optischen Auswertungsmodul 54 zugeführt.

Das optische Auswertungsmodul 54 bestimmt aus dem Punktmuster des Teilbilds 58 (und somit des Bildbereichs 46 des von dem Bildsensor 26 aufgenommenen Bildes) in der bei einem Shack-Hartmann-Sensor üblichen Weise die Wellenfront. Hieraus berechnet das Auswertungsmodul 54 folgende optische Eigenschaften der zu prüfenden Kontaktlinse 22:
- die sphärische Brechkraft s der Kontaktlinse 22
- bei astigmatischen Kontaktlinsen (wie in Fig. 4 abgebildet) die zylindrische Brechkraft z der Kontaktlinse 22, d.h. die Differenz der Brechkräfte in unterschiedlichen Richtungen und die Orientierung der Vorzugsachsen (die Orientierung der Vorzugsachsen wird vorzugsweise als Winkeldifferenz zu der durch die Markierungen 66 angezeigten Orientierung o angegeben).

In alternativen Ausführungen bestimmt das Auswertungsmodul 54 zusätzlich oder alternativ die prismatische Brechkraft, die Wellenaberration und/oder die räumlich aufgelöste Brechkraftverteilung.

Das Auswertungsmodul 54 gibt die ermittelten optischen Eigenschaften, insbesondere die sphärische Brechkraft s und den zylindrische Brechkraft z, aus.

In einer alternativen Ausführungsform wird die Vorrichtung 2 zur Prüfung von asphärischen Linsen, insbesondere (nicht rotationssymmetrischen) Freiformlinsen eingesetzt. Im Unterschied zu der vorstehend beschriebenen Ausführungsform bestimmt das optische Auswertungsmodul 54 hier anstelle der sphärischen Brechkraft s und der zylindrischen Brechkraft z eine zweidimensional ortsaufgelöste räumliche Brechkraftverteilung über die Fläche der geprüften Linse. Diese räumliche Brechkraftverteilung setzt das Auswertungsmodul 54 in Bezug auf die Lage r des geometrischen Zentrums 64 und/oder die Orientierung o.

Fig. 6 zeigt eine andere Ausführungsform des Kombinationsdetektors 16, die alternativ zu der vorstehend beschriebenen Ausführungsform in der Vorrichtung 2 eingesetzt wird. Der Kombinationsdetektor 16 gemäß Fig. 6 entspricht, soweit nicht nachfolgend abweichend beschrieben, der vorstehend beschriebenen Ausführungsform. Er unterscheidet sich von letzterer aber dadurch, dass die Glasplatte 34 in einem das Mikrolinsenarray 32 umgebenden Ringbereich 72 eine größere Dicke aufweist als in dem von dem Mikrolinsenarray 32 eingenommenen Bereich. Der verstärkte Ringbereich 72 wirkt hier als Kompensationselement, durch das die optischen Wege des auf dem Teilbereich 40 der Detektionsfläche 28 auftreffenden, äußeren Teils des Messlichtbündels 20" und des auf dem Mikrolinsenarray 32 auftreffenden, inneren Teils des Messlichtbündels 20" einander angeglichen werden. Das Messlichtbündel 20" wird hierdurch durch das Kepler-Teleskop 10 sowohl auf den Teilbereich 40 der Detektionsfläche 28 als auch auf Mikrolinsenarray 32 scharf abgebildet. Durch den verstärkten Ringbereich 72 wird mit anderen Worten der geometrische Abstand des Mikrolinsenarrays 32 zu der Detektionsfläche 28 kompensiert. Anstelle des verstärkten Ringbereichs 72 der Glasplatte 34 kann auch ein von der Glasplatte 34 losgelöstes Kompensationselement, beispielsweise in Form eines separaten Glasrings zum Einsatz kommen. Ein solches Kompensationselement kann als Teil des Kombinationsdetektors 16 oder als davon losgelöste Komponente der Vorrichtung 2 ausgebildet sein.

### Bezugszeichenliste

- 2: (Prüf-)Vorrichtung
- 4: (Punkt-)Lichtquelle
- 6: Kollimator
- 8: Probenhalter
- 10: Relais-Optik
- 12: Linse
- 14: Linse
- 16: Kombinationsdetektor
- 18: Auswertungseinheit
- 19: (optische) Achse
- 20, 20', 20": Messlichtbündel
- 22: Kontaktlinse
- 24: Einfallsrichtung
- 26: Bildsensor
- 28: Detektionsfläche
- 30: Phasenvisualisierungselement
- 32: Mikrolinsenarray
- 34: Glasplatte
- 36: Gehäuse
- 38: (erster) Teilbereich
- 40: (zweiter) Teilbereich
- 42: Ausgangslichtbündel
- 44: Gesamtbild
- 46: (erster) Bildbereich
- 48: (zweiter) Bildbereich
- 50: Auswertungssoftware
- 52: Segmentierungsmodul
- 54: (optisches) Auswertungsmodul
- 56: Bilderkennungsmodul
- 58: Teilbild
- 60: Teilbild
- 62: Außenkontur
- 64: (geometrisches) Zentrum
- 66: Markierung
- 70: Beschriftung
- 72: Ringbereich

- s: (sphärische) Brechkraft
- d: Durchmesser (der Kontaktlinse)
- D: Durchmesser (des Linsenarrays)
- w: Warnhinweis (auf Defekte der Kontaktklinse)
- o: Orientierung (der Kontaktlinse)
- r: Lage (des geometrischen Zentrums der Kontaktlinse)
- t: Text
- z: (zylindrische) Brechkraft

## Patentansprüche

1. Kombinationsdetektor (16) zur Detektion von mindestens einer visuell erkennbaren Eigenschaft (d, r, o, t) einer Optik (22), nämlich einer Größe, einer Form, einer Kontur, einer Lage, einer Orientierung, eines geometrischen Zentrums, eines Defekts oder einer Beschädigung und/oder einer zweidimensionalen oder dreidimensionalen Markierung, und mindestens einer optischen Eigenschaft (s, z) der Optik (22), mit einem eine Detektionsfläche (28) aufweisenden Bildsensor (26) und mit einem Phasenvisualisierungselement (30), das dazu ausgebildet ist, ein aus einer Einfallrichtung (24) auftreffendes Eingangslichtbündel (20") in ein oder mehrere Ausgangslichtbündel (42) umzuwandeln, in denen die räumliche Phasenverteilung des Eingangslichtbündels (20") visuell sichtbar ist, wobei das Phasenvisualisierungselement (30) derart zu der Detektionsfläche (28) des Bildsensors (26) angeordnet ist, dass das Ausgangslichtbündel oder die Ausgangslichtbündel (42) nur auf einen ersten Teilbereich (38) der Detektionsfläche (28) fallen,
**dadurch gekennzeichnet,**
**dass** ein zweiter Teilbereich (40) der Detektionsfläche (28) zur Detektion des von dem Phasenvisualisierungselement (30) unbeeinflussten Eingangslichtbündels (20") zu der Einfallrichtung (24) hin exponiert ist, so dass ein dem zweiten Teilbereich (40) der Detektionsfläche (28) entsprechender zweiter Bildbereich (48) eines mittels des Bildsensors (26) aufgenommenen Bildes (44) die Information über die mindestens eine visuelle Eigenschaft der Optik (22) enthält.

2. Kombinationsdetektor (16) nach Anspruch 1,
wobei das Phasenvisualisierungselement (30) eine Mikrolinsenanordnung (32), eine Lochplatte, ein Interferenzgitter oder ein Shearing-Interferometer umfasst.

3. Kombinationsdetektor (16) nach Anspruch 1 oder 2,
wobei der erste Teilbereich (38) und der zweite Teilbereich (40) zueinander konzentrisch angeordnet sind.

4. Kombinationsdetektor (16) nach einem der Ansprüche 1 bis 3,
wobei das Phasenvisualisierungselement (30) unmittelbar vor oder auf der Detektionsfläche (28) des Bildsensors (26) fixiert, insbesondere verschraubt verklemmt oder verklebt, ist.

5. Kombinationsdetektor (16) nach einem der Ansprüche 1 bis 4,
wobei der Bildsensor (26) ein CCD-Chip oder ein Photodiodenarray ist.

6. Vorrichtung (2) zum Prüfen einer Optik (22), mit einer Lichtquelle (4) zur Erzeugung eines Messlichtbündels (20) und mit einem Kombinationsdetektor (16) nach einem der Ansprüche 1 bis 5.

7. Vorrichtung (2) nach Anspruch 6,
mit einem in einem Strahlengang des Messlichtbündels (20) zwischen der Lichtquelle (4) und dem Kombinationsdetektor (16) angeordneten Probenhalter (8) zur Fixierung der zu prüfenden Optik (22).

8. Vorrichtung (2) nach Anspruch 6 oder 7,
mit einem optischen Element (72) zur Angleichung der optischen Wege des auf dem Phasenvisualisierungselement (30) auftreffenden Teils des Eingangslichtbündels (20") und des auf dem zweiten Teilbereich (40) der Detektionsfläche (28) auftreffenden Teils des Eingangslichtbündels (20").

9. Vorrichtung (2) nach einem der Ansprüche 6 bis 8,
mit einer Auswertungseinheit (18) zur Auswertung eines von dem Bildsensor (26) aufgenommenen Bildes (44) der zu prüfenden Optik (22), wobei das Bild (44) einen dem ersten Teilbereich (38) der Detektionsfläche (28) entsprechenden ersten Bildbereich (46) und einen dem zweiten Teilbereich (40) der Detektionsfläche (28) entsprechenden zweiten Bildbereich (48) aufweist,
- wobei die Auswertungseinheit (18) dazu eingerichtet ist, automatisch mindestens eine optische Eigenschaft (s, z) der zu prüfenden Optik (22) aus dem ersten Bildbereich (46) zu ermitteln, und/oder
- wobei die Auswertungseinheit (18) dazu eingerichtet ist, automatisch mindestens eine visuell erkennbare Eigenschaft (d, r, o, t) der zu prüfenden Optik (22) aus dem zweiten Bildbereich (48) zu ermitteln.

10. Vorrichtung (2) nach Anspruch 9,
wobei die Auswertungseinheit (18) dazu eingerichtet ist, den ersten Bildbereich (46) und den zweiten Bildbereich (48) in dem Bild (44) automatisch zu erkennen und zu segmentieren.

11. Verwendung der Vorrichtung (2) gemäß einem der Ansprüche 6 bis 10 zum Prüfen von Kontaktlinsen (22) oder Intraokularlinsen.

12. Verfahren zur Detektion von mindestens einer visuell erkennbaren Eigenschaft (d, r, o, t) einer Optik (22), nämlich einer Größe, einer Form, einer Kontur, einer Lage, einer Orientierung, eines geometrischen Zentrums, eines Defekts oder einer Beschädigung und/oder einer zweidimensionalen oder dreidimensionalen Markierung, und mindestens einer optischen Eigenschaft (s, z) der Optik (22),
**dadurch gekennzeichnet,**
- **dass** mittels eines Bildsensors (26) und eines vorgeschalteten Phasenvisualisierungselements (30) ein erstes Teilbild (58) erzeugt wird, in dem eine räumliche Phasenverteilung eines durch die zu prüfende Optik (22) beeinflussten Messlichtbündels (20") visuell erkennbar gemacht ist,
- **dass** mittels des Bildsensors (26) ein zweites Teilbild (60) erzeugt wird, das eine Abbildung oder Projektion eines Teils der zu prüfenden Optik (22) enthält,
- **dass** die mindestens eine optische Eigenschaft (s, z) aus dem ersten Teilbild (58) ermittelt wird, und
- **dass** die mindestens eine visuell erkennbare Eigenschaft (d, r, o, t) aus dem zweiten Teilbild (58) ermittelt wird.

## Claims

1. Combination detector (16) for detecting at least one visually recognizable property (d, r, o, t) of an optical system (22), namely a size, a shape, a contour, a position, an orientation, a geometric center, a defect or a damage and/or a two-dimensional or three-dimensional marking, and at least one optical property (s, z) of the optical system (22), with an image sensor (26) having a detection surface (28) and with a phase visualization element (30), which is designed to convert an input light beam (20") impinging from a direction of incidence (24) into one or more output light beams (42), in which the spatial phase distribution of the input light beam (20") is visually recognizable, wherein the phase visualization element (30) is arranged relative to the detection surface (28) of the image sensor (26) in such a way that the output light beam or the output light beams (42) fall only on a first subregion (38) of the detection surface (28),
**characterized in**
**that** a second subregion (40) of the detection surface (28) is exposed towards the direction of incidence (24) for detecting the input light beam (20"), which is unaffected by the phase visualization element (30), so that a second image region (48) of an image (44) recorded by means of the image sensor (26), corresponding to the second subregion (40) of the detection surface (28), contains the information about the at least one visual property of the optical system (22).

2. Combination detector (16) according to claim 1,
wherein the phase visualization element (30) comprises a microlens array (32), a perforated plate, an interference grating or a shearing interferometer.

3. Combination detector (16) according to claim 1 or 2,
wherein the first subregion (38) and the second subregion (40) are arranged concentrically to one another.

4. Combination detector (16) according to one of claims 1 to 3,
wherein the phase visualization element (30) is fixed, in particular screwed, clamped or glued, directly in front of or on the detection surface (28) of the image sensor (26).

5. Combination detector (16) according to one of claims 1 to 4,
wherein the image sensor (26) is a CCD chip or a photodiode array.

6. Device (2) for testing an optical system (22), with a light source (4) for generating a measurement light beam (20) and with a combination detector (16) according to one of claims 1 to 5.

7. Device (2) according to claim 6,
with a sample holder (8) for fixing the optical system (22) to be tested, said sample holder (8) being arranged in a beam path of the measurement light beam (20) between the light source (4) and the combination detector (16).

8. Device (2) according to claim 6 or 7,
with an optical element (72) for adapting the optical paths of the part of the input light beam (20") impinging on the phase visualization element (30) and the part of the input light beam (20") impinging on the second subregion (40) of the detection surface (28).

9. Device (2) according to one of claims 6 to 8,
with an evaluation unit (18) for evaluating an image (44) of the optical system (22) to be tested, which is recorded by the image sensor (26), the image (44) having a first image region (46) corresponding to the first subregion (38) of the detection surface (28) and a second image region (48) corresponding to the second subregion (40) of the detection surface (28),
- wherein the evaluation unit (18) is designed to automatically determine at least one optical property (s, z) of the optical system (22) to be tested from the first image area (46), and/or
- wherein the evaluation unit (18) is designed to automatically determine at least one visually recognizable property (d, r, o, t) of the optical system (22) to be tested from the second image area (48).

10. Device (2) according to claim 9,
wherein the evaluation unit (18) is designed to automatically recognize and segment the first image area (46) and the second image area (48) in the image (44)

11. Use of the device (2) according to one of claims 6 to 10 for testing contact lenses (22) or intraocular lenses.

12. Method for detecting at least one visually recognizable property (d, r, o, t) of an optical system (22), namely a size, a shape, a contour, a position, an orientation, a geometric center, a defect or a damage and/or a two-dimensional or three-dimensional marking, and at least one optical property (s, z) of the optics (22),
**characterized in**
- **that** a first partial image (58) is generated by means of an image sensor (26) and an upstream phase visualization element (30), in which first partial image (58) a spatial phase distribution of a measurement light beam (20") influenced by the optical system (22) to be tested is made visually recognizable,
- **that** a second partial image (60) is generated by means of the image sensor (26), which contains an image or projection of a part of the optical system (22) to be tested,
- **that** the at least one optical property (s, z) is determined from the first partial image (58), and
- **that** the at least one visually recognizable property (d, r, o, t) is determined from the second partial image (58).

## Revendications

1. Détecteur de combinaison (16) pour détecter au moins une propriété visuellement reconnaissable (d, r, o, t) d'un système optique (22), à savoir une taille, une forme, un contour, une position, une orientation, un centre géométrique, un défaut ou un dommage et/ou un marquage bidimensionnel ou tridimensionnel, et au moins une propriété optique (s, z) du système optique (22) un défaut ou un dommage et/ou un marquage bidimensionnel ou tridimensionnel, et au moins une propriété optique (s, z) du système optique (22), avec un capteur d'image (26) ayant une surface de détection (28) et avec un élément de visualisation de phase (30), qui est conçu pour convertir un faisceau lumineux d'entrée (20") frappant d'une direction d'incidence (24) en un ou plusieurs faisceaux lumineux de sortie (42), dans lesquels la distribution spatiale de phase du faisceau lumineux d'entrée (20") est visuellement reconnaissable, l'élément de visualisation de phase (30) étant disposé par rapport à la surface de détection (28) du capteur d'image (26) de telle sorte que le faisceau lumineux de sortie ou les faisceaux lumineux de sortie (42) tombent seulement sur une première sous-section (38) de la surface de détection (28),
**caractérisé en ce**
**qu'**une deuxième sous-section (40) de la surface de détection (28) est exposée vers la direction d'incidence (24) pour la détection du faisceau lumineux d'entrée (20"), qui n'est pas influencée par l'élément de visualisation de phase (30), de sorte qu'une deuxième région d'image (48) d'une image (44) enregistrée au moyen du capteur d'image (26), correspondant à la deuxième sous-région (40) de la surface de détection (28), ladite deuxième zone d'image (44) contenant les informations relatives à au moins une propriété visuelle du système optique (22).

2. Détecteur de combinaison (16) selon la revendication 1,
dans lequel l'élément de visualisation de phase (30) comprend un réseau de microlentilles (32), une plaque perforée, un réseau d'interférence ou un interféromètre de cisaillement.

3. Détecteur de combinaison (16) selon la revendication 1 ou 2,
dans lequel la première sous-section (38) et la deuxième sous-section (40) sont disposées concentriquement l'une par rapport à l'autre.

4. Détecteur de combinaison (16) selon l'une des revendications 1 à 3,
dans lequel l'élément de visualisation de phase (30) est fixé, en particulier vissé, serré ou collé, directement devant ou sur la surface de détection (28) du capteur d'images (26).

5. Détecteur de combinaison (16) selon l'une des revendications 1 à 4,
dans lequel le capteur d'image (26) est une puce CCD ou une matrice de photodiodes.

6. Dispositif (2) pour tester un système optique (22), avec une source lumineuse (4) pour générer un faisceau lumineux de mesure (20) et avec un détecteur de combinaison (16) selon l'une des revendications 1 à 5.

7. Dispositif (2) selon la revendication 6,
avec un porte-échantillon (8) pour fixer le système optique (22) à tester, ledit porte-échantillon (8) étant disposé sur le trajet du faisceau lumineux de mesure (20) entre la source lumineuse (4) et le détecteur combiné (16).

8. Dispositif (2) selon la revendication 6 ou 7,
avec un élément optique (72) pour adapter les chemins optiques de la partie du faisceau lumineux d'entrée (20") frappant sur l'élément de visualisation de phase (30) et la partie du faisceau lumineux d'entrée (20") frappant sur la deuxième sous-section (40) de la surface de détection (28).

9. Dispositif (2) selon l'une des revendications 6 à 8,
avec une unité d'évaluation (18) pour évaluer une image (44) du système optique (22) à tester, qui est prise par le capteur d'image (26), l'image (44) ayant une première région d'image (46) correspondant à la première sous-section (38) de la surface de détection (28) et une deuxième région d'image (48) correspondant à la deuxième sous-section (40) de la surface de détection (28),
- l'unité d'évaluation (18) étant conçue pour déterminer automatiquement au moins une propriété optique (s, z) du système optique (22) à tester à partir de la première zone d'image (46), et/ou
- l'unité d'évaluation (18) étant conçue pour déterminer automatiquement au moins une propriété visuellement reconnaissable (d, r, o, t) du système optique (22) à tester à partir de la deuxième zone d'image (48).

10. Dispositif (2) selon la revendication 9,
dans lequel l'unité d'évaluation (18) est conçue pour reconnaître et segmenter automatiquement la première zone d'image (46) et la deuxième zone d'image (48) dans l'image (44)

11. Utilisation du dispositif (2) selon l'une des revendications 6 à 10 pour tester des lentilles de contact (22) ou des lentilles intraoculaires.

12. Procédé pour détecter au moins une propriété visuellement reconnaissable (d, r, o, t) d'un système optique (22), à savoir une taille, une forme, un contour, une position, une orientation, un centre géométrique, un défaut ou un dommage et/ou un marquage bidimensionnel ou tridimensionnel, et d'au moins une propriété optique (s, z) de l'optique (22),
**caractérisé en ce**
- **qu'**une première image partielle (58) est générée au moyen d'un capteur d'image (26) et d'un élément de visualisation de phase (30) en amont, dans lequel une distribution de phase spatiale d'un faisceau lumineux de mesure (20") influencé par le système optique (22) à tester est rendue visuellement reconnaissable,
- **qu'**une deuxième image partielle (60) est générée au moyen du capteur d'image (26), qui contient une image ou une projection d'une partie du système optique (22) à tester,
- qui l'au moins une propriété optique (s, z) est déterminée à partir de la première image partielle (58), et
- **que** l'au moins une propriété visuellement reconnaissable (d, r, o, t) est déterminée à partir de la deuxième image partielle (58).
